# EUROPEAN PATENT APPLICATION

(11) **EP 4 636 722 A2**
(43) Date of publication of application: **22.10.2025**
(21) Application number: 25169561.5
(22) Date of filing: 09.04.2025
(51) Int. Cl.: G08B 7/06, G06Q 90/00, G08B 25/14

(54) **GENERATING A ROUTE THROUGH A FACILITY DURING AN EVENT**

(30) Priority: 19.04.2024 US 202418640500
(71) Applicant: Honeywell International Inc., Charlotte, NC 28202 (US)
(72) Inventor: WOLF, Benjamin H., Charlotte, 28202 (US); BARSON, Michael, Charlotte, 28202 (US); SHARIFF, Hassan M., Charlotte, 28202 (US); BALDWIN, Andrew J., Charlotte, 28202 (US)
(74) Representative: Haseltine Lake Kempner LLP

(57) **Abstract**

Devices, systems, and methods for generating a route through a facility during an event are described herein. In some examples, one or more embodiments include a memory and a processor to execute instructions stored in the memory to receive an event detection signal from an event device indicating an event is occurring in a facility, determine the predefined detection zone in which the event is occurring based on the event detection signal, generate an egress route out of the facility based on the determined predefined detection zone having the event, and cause a building map of the facility to be displayed on a user interface of a display.

## Description

### Technical Field

The present disclosure relates to devices, systems, and methods for generating a route through a facility during an event.

### Background

Facilities, such as commercial facilities, office buildings, hospitals, campuses (e.g., including buildings and outdoor spaces), and the like, may have an event detection system that can be triggered during an event, such as an emergency situation (e.g., a fire) to warn occupants to evacuate. Such an event detection system may include an alarm system having a control panel and a number of event devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of event devices may provide a notification of the event to the occupants of the facility via alarms and/or other mechanisms.

### Brief Description of the Drawings

Figure 1 is an example of a system for generating a route through a facility during an event, in accordance with one or more embodiments of the present disclosure.
Figure 2 is an example of a building map on a user interface of a display including a building layout, in accordance with one or more embodiments of the present disclosure.
Figure 3 is an example of a building map on a user interface of a display including a building layout showing a detection zone in which an event is occurring, an egress route, and a revised egress route, in accordance with one or more embodiments of the present disclosure.
Figure 4 is an example of a building map on a user interface of a display including a building layout showing a detection zone in which an event is occurring and a location of a mobile device of a vulnerable person, in accordance with one or more embodiments of the present disclosure.
Figure 5 is an example of emergency instructions on a user interface of a display including textual information, in accordance with one or more embodiments of the present disclosure.
Figure 6 is an example of a building map on a user interface of a display including a building layout showing a detection zone in which an event is occurring and a route to a location of a mobile device of a vulnerable person, in accordance with one or more embodiments of the present disclosure.
Figure 7 is an example of instructions on a user interface of a display including test results of a test of an event device, in accordance with one or more embodiments of the present disclosure.
Figure 8 is an example of a controller for generating a route through a facility during an event, in accordance with one or more embodiments of the present disclosure.

### Detailed Description

Devices, systems, and methods for generating a route through a facility during an event are described herein. In some examples, one or more embodiments include a memory and a processor to execute instructions stored in the memory to receive an event detection signal from an event device indicating an event is occurring in a facility, determine the predefined detection zone in which the event is occurring based on the event detection signal, generate an egress route out of the facility based on the determined predefined detection zone having the event, and cause a building map of the facility to be displayed on a user interface of a display.

A facility can utilize an event detection system in order to warn occupants of the facility of an emergency event, such as a fire. An event detection system can be a system of devices that operate to collect information about a facility and provide the collected information for analysis. Such an event detection system can also take actions based on the collected information, such as providing an audible and/or visible warning in an emergency event. For example, the event detection system can utilize event devices to warn occupants of an emergency event occurring in a space, such as a fire. As used herein, the term "event device" refers to a device that can receive an input relating to an event and/or generate an output relating to an event. Such event devices can be a part of the event detection system of a space in a facility/in the facility at large and can include devices such as fire sensors, smoke detectors, heat detectors, carbon monoxide (CO) detectors, or combinations of these; air quality sensors; interfaces; manual call points (MCPs); pull stations; input/output modules; aspirating units; fire doors; and/or audio/visual devices (e.g., speakers, sounders, flashers, buzzers, microphones, cameras, video displays, video screens, etc.), relay output modules, among other types of event devices. Such event devices may also include self-test capabilities.

In an emergency event, occupants of the facility may have to evacuate out of the facility or to safe refuges within the facility. One way to direct occupants of the facility can include zonal plans. Zonal plans can be an illustration of a facility showing a layout of the facility, including rooms, doors, exits, hallways, stairwells, egress routes, etc. The zonal plans can be printed maps of the facility which include the layout of the facility printed onto the map, and can include predetermined egress routes from the location of the zonal plan in the facility out of the facility. Such zonal plans may be located in various locations around the facility, such as in various rooms, in refuge areas, in stairwells, proximate to access points (e.g., entrances/exits) of the facility, near control panels, etc.

While printed zonal plans can provide information to occupants of the facility, they cannot be updated unless they are re-printed. For example, if the facility undergoes re-modeling such that the layout of the facility is changed, such zonal maps have to be re-printed to update the layout of the facility. Additionally, if an event occurs that is along the predetermined egress route, occupants of the facility may unknowingly transit directly towards and/or into an area of the facility in which the event is occurring.

Additionally, during an event, emergency services personnel may utilize the printed zonal plans to navigate through the facility (e.g., in order to locate trapped or vulnerable persons, to take countermeasures against the event, etc.) However, if a route through the facility to the event is inaccessible, emergency services personnel may have to determine a different route on their own.

Further, certain occupants of the facility may be at higher risk of injury or death in an emergency event than other occupants. Vulnerable persons, such as those occupants that have a disability, are non-able bodied, or the like may not be as mobile as other occupants which are not disabled, are able bodied, etc. A vulnerable person can be, for example, a person who has a physical and/or mental impairment that limits one or more life activities. In an emergency event, such vulnerable persons may not evacuate the facility as quickly as non-vulnerable persons, resulting in a higher risk of injury or death to the vulnerable persons from the emergency event.

Generating a route through a facility during an event, according to the disclosure, can utilize a building map displayed on a user interface of a display including a building layout. The building layout can include an egress route which can be generated based on a location of the event in the facility so as to avoid directing occupants into the event, and rather to direct the occupants safely away from the event and out of the facility. The user interface can update the building layout as information becomes available regarding the event so that egress routes can be updated as well. In addition, the user interface can display emergency instructions for occupants to guide occupants regarding the event.

Further, certain displays can provide locations of and routes to any trapped occupants and/or vulnerable persons for emergency services personnel, reducing the risk of injury or death to the vulnerable person during the emergency event. Such an approach can allow for event detection systems which are safer as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

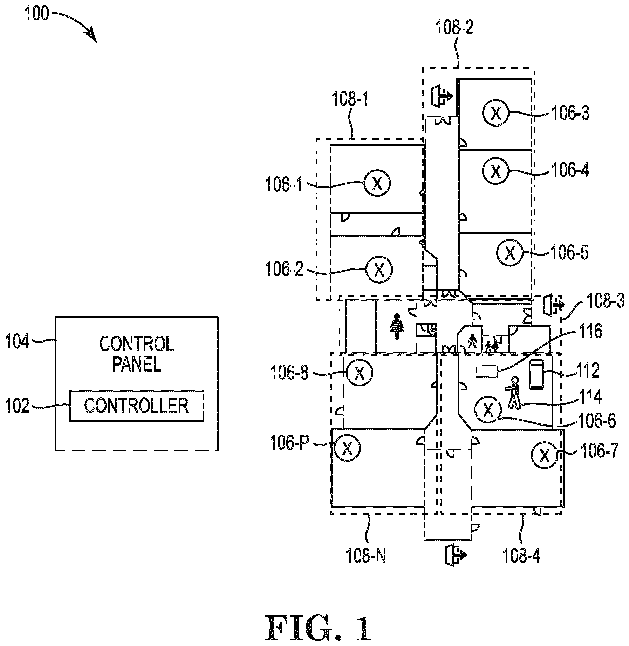

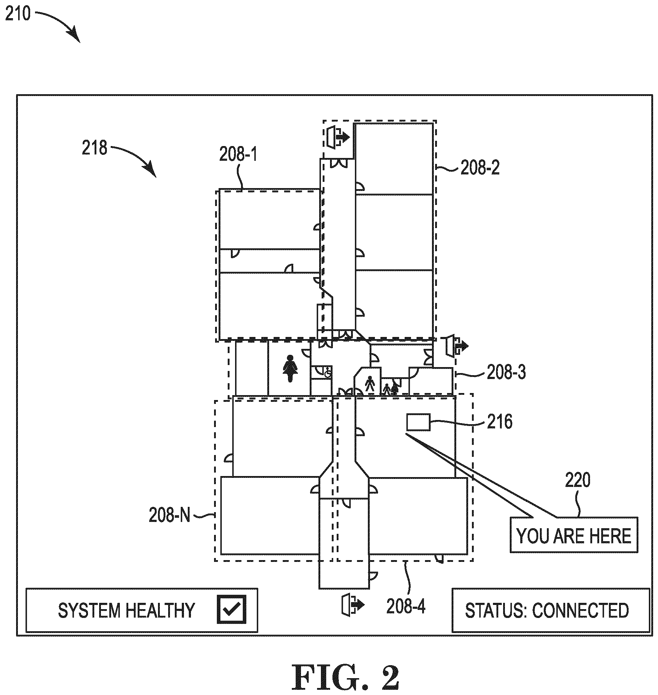

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for generating a route through a facility during an event, in accordance with one or more embodiments of the present disclosure. The system 100 can include a controller 102, a control panel 104, event devices 106-1, 106-2, 106-3, 106-4, 106-5, 106-6, 106-7, 106-8, 106-P (referred to collectively herein as event devices 106), and detection zones 108-1, 108-2, 108-3, 108-4, 108-N (referred to collectively herein as detection zones 108).

As mentioned above, the system 100 can be included in a facility, a space in a facility, etc. The system 100 can include a device/series of devices in order to detect events and/or process and/or analyze the detected events to determine whether to generate an alarm for occupants of the facility.

For example, the system 100 can include event devices 106-1, 106-2, 106-N (referred to collectively as event devices 106). The event devices 106 can be devices to detect an event and transmit the detected event for processing and/or analysis. As mentioned above, the event devices 106 can include, for example, cameras, motion sensors, fire sensors, smoke detectors, heat detectors, carbon monoxide (CO) detectors, fixed gas and/or flame detectors, aspirating smoke detectors, beam smoke detectors, or combinations of these; air quality sensors; interfaces; manual call points (MCPs); pull stations; input/output modules; aspirating units; fire doors; sprinkler controls; and/or audio/visual devices (e.g., speakers, microphones, cameras, video displays, video screens, etc.), relay output modules, among other types of event devices. Additionally, event devices 106 may also include self-test capabilities.

The system 100 can further include a control panel 104. The control panel 104 can be utilized to control the various event devices 106 included in the system 100.

The control panel 104 can be connected to the event devices 106, transmit a plurality of commands to the event devices 106, and/or provide power to the event devices 106. The control panel 104 can apply a voltage to an event device loop in order to power event devices 106 on the event device loop. Such power can allow the event devices 106 to perform actions, such as communication between event devices 106 and the control panel 104, self-test procedures, and/or provide an audible and/or visible warning in an event, among other actions.

As illustrated in Figure 1, the system 100 can include a controller 102. In some examples, as illustrated in Figure 1, the controller 102 can be located in the control panel 104. However, embodiments of the disclosure are not so limited. For instance, in some examples, the controller 102 may be located externally from the control panel 104 (e.g., and the event detection system altogether), but can be connected to the control panel 104 and/or the event devices 106 via a network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

As illustrated in Figure 1, the facility can include various rooms, doors, exits, hallways, stairwells, etc. These areas may be arranged into various detection zones 108 with respect to the operation of the event detection system. A detection zone 108 can be a software-defined zone that is associated with a physical area in the facility. For example, the detection zones 108 can be predefined zones comprising geographic areas of the facility. For instance, detection zone 108-1 may include two offices on a first floor of the facility, the predefined detection zone 108-2 may include three offices and a hallway on the first floor of the facility, the detection zone 108-3 may include a hallway, restrooms, and a lobby on a first floor of the facility, the detection zone 108-4 may include two conference rooms and a hallway on the first floor of the facility, and the detection zone 108-N may include two offices on the first floor of the facility.

While five detection zones 108-1, 108-2, 108-3, 108-4, 108-N are illustrated in Figure 1, embodiments of the disclosure are not so limited. For example, there may be less than five or more than five detection zones 108 in the facility. Further, such detection zones may incorporate more or less area of the facility than shown in Figure 1. For example, one detection zone may cover one office, and another detection zone may cover a different office. In some examples, one area of the facility may include multiple detection zones (e.g., one office includes two detection zones).

Various event devices 106 are illustrated in Figure 1 as being included in the detection zones 108. For example, detection zone 108-1 can include event devices 106-1 and 106-2, detection zone 108-2 can include event devices 106-3, 106-4, and 106-5, detection zone 108-3 can include various event devices not illustrated in Figure 1, detection zone 108-4 can include event devices 106-6 and 106-7, and detection zone 108-N can include event devices 106-8 and 106-P. Additionally, the detection zones 108 as illustrated in Figure 1 can include more or less event devices than illustrated in Figure 1.

In an example in which an event device 106 detects an event, the event device 106 can transmit a signal to the control panel 104. The controller 102 can determine a location of the event. For example, event device 106-3 can detect an event (e.g., a fire, where the event device 106-3 is a heat detector), the event device 106-3 can transmit a signal to the control panel 104, and in response, the controller 102 can determine, based on the event device 106-3 that transmitted the signal, that the event is occurring in the detection zone 108-2. In such an example, the event devices 106 can have predefined detection zones 108 associated therewith to allow the controller 102 to determine the detection zone 108 associated with the event device 106 transmitting the signal. In this case, the controller 102 may cause the event detection system to initiate an alarm for the facility.

In some examples, an occupant 114 may carry a mobile device 112. As used herein, a mobile device can include devices that are (or can be) carried and/or worn by a user. For example, a mobile device can be a phone (e.g., a smart phone), a tablet, a laptop computer, a personal digital assistant (PDA), smart glasses, a smart lanyard, and/or a wrist-worn device (e.g., a smart watch), among other types of mobile devices.

The mobile device 112 can transmit a signal. The signal can be electromagnetic waves generated by a transmitter (e.g., in the mobile device 112). The signal can be transmitted by the mobile device 112 and received by any one of the event devices 106 via a network relationship. Any one of the event devices 106 can include a receiver that can receive the signal and transmit the signal to the controller 102 in the control panel 104. The controller 102 can receive the signal from an event device 106. The signal can indicate where the occupant 114 is located in the facility. That is, the signal can indicate an occupant 114 is located in a detection zone 108-3, as is further described herein. For example, utilizing the signal, the controller 102 can determine the mobile device 112 associated with the occupant 114 is located in the detection zone 108-3 of a plurality of detection zones 108.

As the event devices 106 can be known to the controller 102 as being located in particular detection zones 108, the controller 102 can determine the mobile device 112 associated with the occupant 114 is located in the detection zone 108. For example, the controller 102 can determine that the signal was received from event device 106-6, determine the predefined location of the event device 106-6 as being in the detection zone 108-4, and then as a result, determine the mobile device 112 associated with the occupant 114 is located in the detection zone 108-4.

In some examples, a precise location of the mobile device 112 in the detection zone 108-4 may be determined. For example, the mobile device 112 may be in wireless communication with three of the event devices 106-5, 106-6, 106-7. Signal strengths between the mobile device 112 and the event devices 106-5, 106-6, 106-7 may be transmitted to the controller 102 and utilizing the signal strengths, the controller 102 may triangulate a specific position of the mobile device 112 within the predefined detection zone 108-4.

Although location determination of the mobile device 112 is described above as being performed using wireless communication between the mobile device 112 and the event devices 106, embodiments of the disclosure are not so limited. For example, the mobile device 112 may utilize a global positioning system (GPS), cellular network triangulation, and/or other beacon triangulation (e.g., Bluetooth beacons or other beacons) to determine its location and transmit that location information to the controller 102. In other words, while the mobile device 112 is described above as utilizing event devices 106 within the event detection system for location determination, embodiments of the disclosure are not limited to utilizing event devices 106 within the event detection system, as the mobile device 112 may utilize other mechanisms outside of the event detection system to determine its location in the facility.

The system 100 can further include a display 116. The display 116 can include a user interface and can be located in a space within the detection zone 108-4. For example, the office in the detection zone 108-4 may include the display 116.

Although not illustrated in Figure 1 for clarity and so as not to obscure embodiments of the present disclosure, the system 100 can include more than one display 116. For example, each space within each detection zone 108 may include a display.

The controller 102 can cause a building map to be displayed on a user interface of a display 116. For example, the building map can include a building layout including a zonal layout of the detection zones 108. The occupant 114 may view the display 116 to see the zonal layout of the facility. If an event occurs in the facility, the controller can cause the building map to also include a detection zone 108 in which the event is occurring, a route to a refuge location in the facility, an egress route out of the facility, and/or a route to an occupant located in the facility (e.g., for use by emergency services personnel when a display 116 is located proximate to an access point of the facility), as is further described herein in connection with Figures 2-7.

Figure 2 is an example of a building map 218 on a user interface 210 of a display including a building layout, in accordance with one or more embodiments of the present disclosure. A controller (e.g., controller 102, previously described in connection with Figure 1) can cause the building map 218 to be displayed on the user interface 210.

As previously described in connection with Figure 1, the controller can cause the building map 218 to be displayed on the user interface 210 of the display 216. As illustrated in Figure 2, the building map 218 can include a building layout including a zonal layout of the detection zones 208.

As used herein, the term "display" refers to an output device that includes a display panel having a user interface that displays information provided by an electrical signal in a visual and/or tactile form. As used herein, the term "display panel" refers to an area of a display device that displays information. For example, a display device can have a display panel that operates as a user interface that can display information such as text, videos, images, or combinations thereof as a result of an electrical signal provided to the display.

In some examples, the display 216 can be an electronic ink (e.g., e-ink) display. The e-ink display 216 can allow for the display 216 to operate with low-power consumption relative to other displays, although embodiments of the present disclosure are not limited to e-ink displays. For example, the display 216 may be a light-emitting diode (LED) display, liquid-crystal display (LCD), plasma display, capacitive touch-screen display, organic-LED (OLED) display, or other types of displays. In some examples, the e-ink display 216 can be a color e-ink display.

As illustrated in Figure 2, the building map 218 can include a location 220 of the display 216 in the facility. The location 220 of the display 216 in the facility can shown be relative to the detection zones 208. For example, the location 220 of the display 216 can be displayed on the building map 218 so that the display 216 is located in the detection zone 208-4. Further, an indicator can show an occupant of the facility the location of the display 316 in order for the occupant to orient and locate themselves in the facility relative to the map on the display 216.

Although not illustrated in Figure 2 for clarity and so as not to obscure embodiments of the present disclosure, the building map 218 can illustrate the detection zones 208 via other methods. For instance, the building map 218 can illustrate the detection zones 208 as being different by utilizing color-coding (e.g., color-coding detection zone 208-1 a first color and detection zone 208-2 a second color that is different from the first color, etc.), utilizing different hatching/cross-hatching techniques, etc.

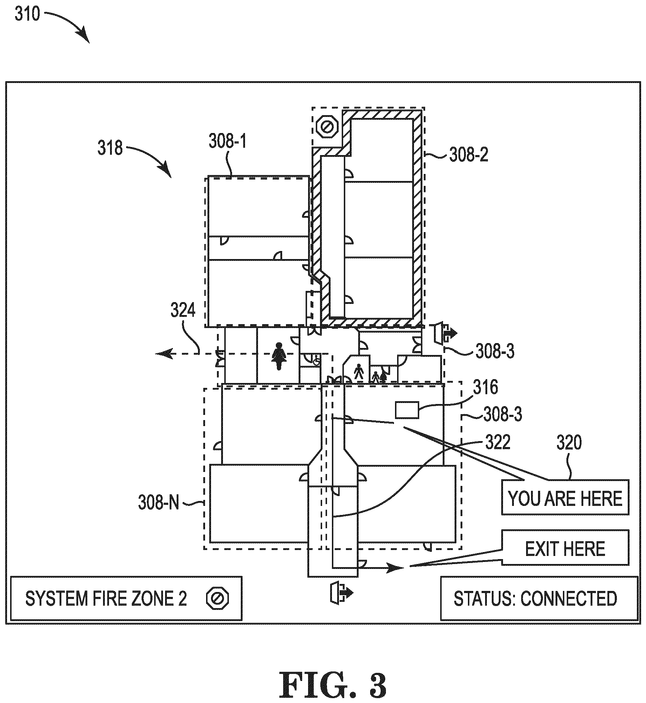

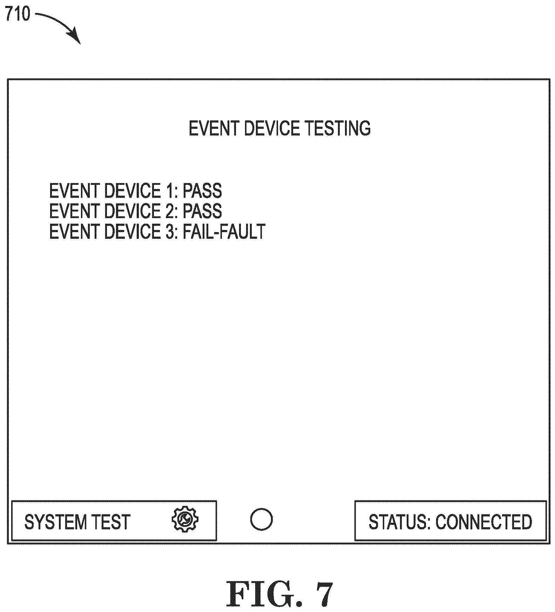

In some examples, the user interface 210 can include an operating mode of an event device. For example, the user interface 210 can indicate the event device is operating in a normal operating mode, indicated by the "SYSTEM HEALTHY" text and check mark indicator icon. An event device can, in some instances, indicate an emergency event is occurring, as is further described in connection with Figures 3-6, and can indicate the event device is operating in a maintenance mode, as is further described in connection with Figure 7.

The controller can cause the building map 218 to be displayed using predefined icons stored in a remote computing device. The controller may be connected to the remote computing device. The predefined icons can indicate to an occupant different areas of the facility, different space types (e.g., office, restroom, conference room, etc.), objects in the facility (e.g., doors, stairwells, etc.), etc. The predefined icons may be dictated by ordinances, statutes, or other regulations that may be set by governmental or other authorities in a jurisdiction in which the facility is located.

The zonal layout as illustrated in Figure 2 can be a predefined facility layout stored in the remote computing device. For example, the facility layout can be part of a building information model that is a representation of the physical and functional characteristics of the facility. The predefined facility layout may include the zonal layout of the facility, including the zone numbering, building labels, predefined egress routes from each area of the facility, etc. In an example in which the facility undergoes a change in the layout of the facility, the predefined facility layout may also be updated. For example, if an office space is added that includes new event devices, the predefined facility layout may also be updated to include the new office space and new event devices. Accordingly, if such a change occurs, the controller can cause the building map 218 to be updated and reflected in the user interface 210.

Figure 3 is an example of a building map 318 on a user interface 310 of a display including a building layout showing a detection zone 308 in which an event is occurring, an egress route 322, and a revised egress route 324, in accordance with one or more embodiments of the present disclosure. A controller (e.g., controller 102, previously described in connection with Figure 1) can cause the building map 318 to be displayed on the user interface 310.

As illustrated in Figure 3, an event may be occurring in the facility. A controller (e.g., controller 102, previously described in connection with Figure 1) can receive an event detection signal from an event device (e.g., event device 106-3) that an event is occurring in the facility. The event device can be located in the detection zone 308-2.

The controller can determine the predefined detection zone in which the event is occurring based on the event detection signal. For example, the controller can determine that based on the event detection signal coming from an event device located in the detection zone 308-2, that the event is occurring in the detection zone 308-2.

Based on the detection zone 308-2 having the event, the controller can generate an egress route out of the facility. For example, the controller can generate an egress route 322 for the display 316 located in the detection zone 308-4 based on the detection zone 308-2 having the event. The egress route 322 can be a route out of the facility from the location of the display 316 in the facility. For instance, the egress route 322 can be a route that avoids the detection zone 308-2 so that any occupants utilizing the generated egress route can avoid the detection zone 308-2.

The controller can further cause the building map 318 to be displayed on the user interface 310 of the display 316. For example, the building map 318 can include the building layout including the zonal layout of the detection zones 308, the detection zone 308-2 in which the event is occurring, and the egress route 322 from the location of the display 316 out of the facility. The building map 318 can illustrate the detection zone 308-2 on the user interface 310 such that it is apparent to any occupants that the event is occurring in the detection zone 308-2. For example, the detection zone 308-2 may be color coded (e.g., red) on the user interface 310 so that occupants of the facility are aware the event is occurring in the detection zone 308-2. Additionally, in some examples, the detection zone 308-2 may include particular hatching (e.g., cross-hatching) or other indicators that the detection zone 308-2 is where the event is occurring and should be avoided.

The controller can repeat this process for displays located throughout the facility. Therefore, occupants located in other areas of the facility can determine where they are located in the facility and determine an egress route out of the facility from the locations of the displays around the facility.

In some examples, the controller may receive updated information regarding the event that is occurring. For example, emergency service personnel may respond to the event and determine that a door on the egress route 322 is blocked. Because blockage of the door may prevent occupants from evacuating using the egress route 322, a revised route may be generated, as is further described herein.

For example, the controller may receive emergency services information indicating that the egress route 322 is unavailable. Such information may be transmitted to the controller from a computing device. The controller can generate a revised egress route out of the facility based on the emergency services information. For example, knowing that a route is blocked on the egress route 322, the controller can generate a revised egress route 324. While the revised egress route 324 may not be the initially generated egress route because the revised egress route 324 now directs occupants towards the detection zone 308-2 having the event, the revised egress route 324 may now be the most viable egress route. Accordingly, the controller can cause the building map 318 to be displayed on the user interface 310 including the revised egress route 324. Accordingly, occupants may now utilize the revised egress route 324 to evacuate from the facility.

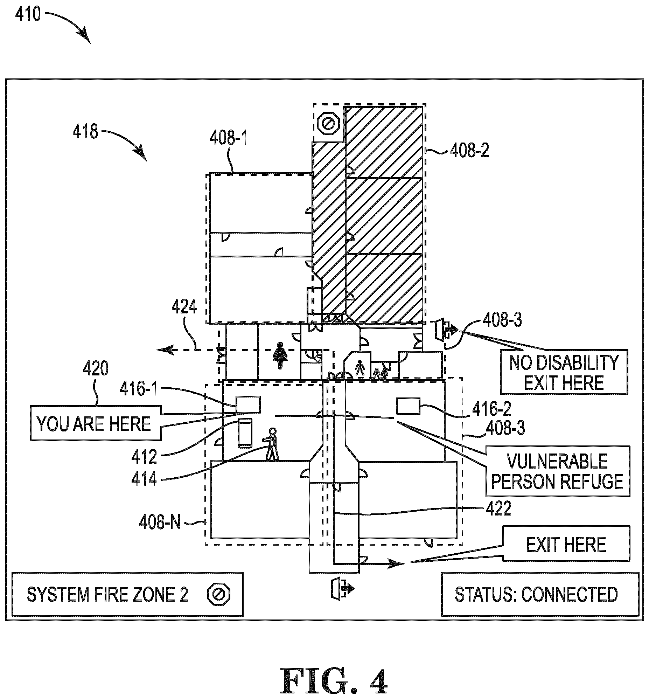

Figure 4 is an example of a building map 418 on a user interface 410 of a display including a building layout showing a detection zone 408 in which an event is occurring and a location of a mobile device of a vulnerable person, in accordance with one or more embodiments of the present disclosure. A controller (e.g., controller 102, previously described in connection with Figure 1) can cause the building map 418 to be displayed on the user interface 410.

In some instances, occupants of the facility may be vulnerable persons. Vulnerable persons, such as those occupants that have a disability, are non-able bodied, or the like may not be as mobile as other occupants which are not disabled, are able bodied, etc.

The occupant 414 may be a vulnerable person. The occupant 414 may carry a mobile device 412. As previously mentioned in Figure 1, the mobile device 412 can transmit a signal. The signal can be, for instance, a vulnerable person signal. The vulnerable person signal can include evacuation data associated with the occupant 414. Evacuation data can be information that may be useful in planning for evacuation of the occupant 414. For example, evacuation data can include identification information of the occupant 414 (e.g., the occupant's name, birthday, address, etc.), a disability of the occupant 414 (e.g., the occupant 414 is a quadriplegic), and/or equipment that would assist in evacuation of the occupant 414 (e.g., a wheelchair). In addition, the vulnerable person signal may include special identifiers that allow the controller to identify the signal as a vulnerable person signal. As previously mentioned above, the controller can receive the vulnerable person signal from the mobile device 412 and determine a location of the occupant 414 based on the signal from the mobile device 412.

Additionally, as previously mentioned above, the controller can receive an event detection signal from an event device indicating an event is occurring in the facility. The controller can determine a detection zone 408-2 in which the event is occurring based on the event detection signal.

As illustrated in Figure 4, the controller can determine the event is occurring in the detection zone 408-2. The occupant 414 can be determined to be located in detection zone 408-N based on the location of the mobile device 412 being determined to be in the detection zone 408-N.

The controller can generate emergency instructions for the occupant 414 (e.g., the vulnerable person) based on the determined detection zone 408-2 having the event and the location of the mobile device 412. Additionally, the controller can cause the building map 418 of the facility to be displayed on the user interface 410 of the display 416-1. The building map 418 can include the building layout including a zonal layout of the detection zones 408, the detection zone 408-2 in which the event is occurring, and the emergency instructions, as is further described herein.

For example, the display 416-1 can display emergency instructions for the occupant 414. In some examples, when an event detection system is in an alarm mode (e.g., during an event), there may be buzzers, sounders, information over loudspeakers being broadcast, and/or other loud sounds being emitted. In an instance in which the occupant 414 is hearing impaired, the emergency instructions displayed on the display 416-1 may provide information on how to respond for the occupant 414.

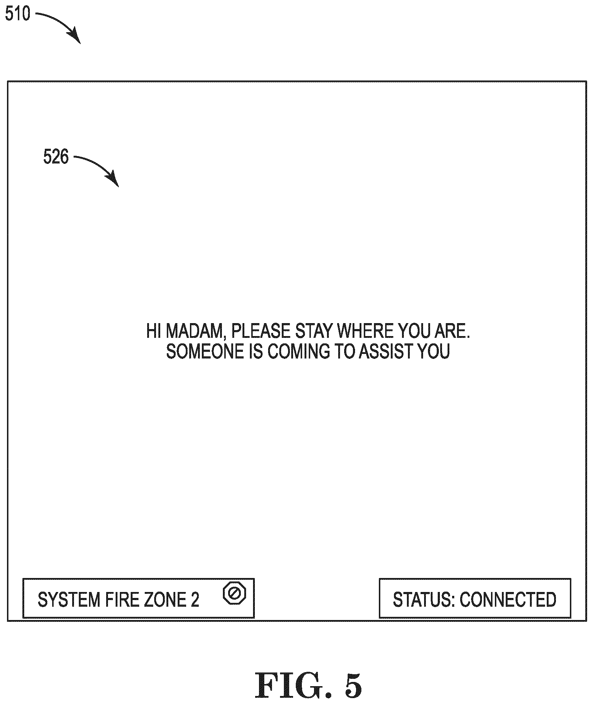

The emergency instructions may be textual information to direct the occupant 414, as is further described in connection with Figure 5. For instance, the textual information may tell the occupant 414 to follow an egress route 422 out of the facility (if they are able, as is further described herein). In some examples, the textual information may tell the occupant 414 to proceed to a vulnerable person refuge (e.g., located in detection zone 408-3), as is further described herein.

As previously mentioned, the controller can receive the vulnerable person signal from the mobile device 412, where the vulnerable person signal can include evacuation data associated with the occupant 414. The controller can determine whether the occupant 414 is able to follow the egress route 422 to evacuate the facility based on the occupant 414 disability. For instance, in an example in which the occupant 414 is deaf, but the egress route 422 is accessible, the controller can cause the user interface 410 to display the building map 418 and the egress route 422, as well as emergency instructions to evacuate the facility.

However, in another example in which the occupant 414 is a paraplegic and utilizes a wheelchair, but the egress route 422 is non-wheelchair accessible, the controller can display emergency instructions to proceed to a vulnerable person refuge located in the detection zone 408-3 and await further instructions. The controller can additionally cause the user interface 410 to display the building map 418 and a route to the vulnerable person refuge.

As previously mentioned, the controller can determine that the signal from the occupant 414's mobile device 412 is transmitting a vulnerable person signal. Accordingly, the display 416-1 may display such additional information to the occupant 414 who is a vulnerable person but may not display such additional information to others. In order to accomplish this, the controller can cause the display 416-1 to display the emergency instructions in response to the mobile device 412 being within a threshold distance of the display 416-1. Additionally, the controller can cause the display 416-2 to display emergency instructions to the occupant 414 in the vulnerable person refuge when the occupant transits to the vulnerable person refuge such that the mobile device 412 is within a threshold distance of the display 416-2. Such an approach can allow for tailored information to be provided to certain occupants (e.g., vulnerable persons) over others, who may be able to more easily evacuate the facility than a vulnerable person.

Figure 5 is an example of emergency instructions 526 on a user interface 510 of a display including textual information, in accordance with one or more embodiments of the present disclosure. A controller (e.g., controller 102, previously described in connection with Figure 1) can cause the emergency instructions 526 to be displayed on the user interface 510.

As previously mentioned in Figure 4, the user interface 510 of the display can display emergency instructions 526 for occupants of the facility. For instance, if the occupant is a vulnerable person, the emergency instructions 526 can allow for the vulnerable person to receive information about the event that is occurring, and to guide the vulnerable person regarding the event.

For example, as illustrated in Figure 5, the emergency instructions 526 can include textual information to tell the occupant, "PLEASE STAY WHERE YOU ARE. SOMEONE IS COMING TO ASSIST YOU." Such information may be provided to an occupant located in the vulnerable person refuge, which may be safe from the event but allow emergency service personnel to respond to assist the occupant in evacuating the facility. Such textual information may better communicate instructions to the occupant when an event detection system is in an alarm mode, as alarms and other devices may broadcast sounds that are loud.

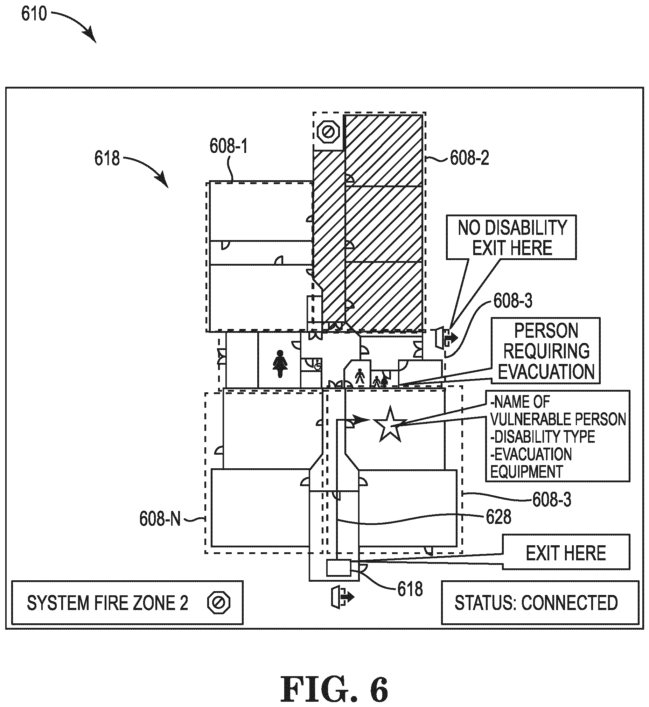

Figure 6 is an example of a building map 618 on a user interface 610 of a display 616 including a building layout showing a detection zone 608 in which an event is occurring and a route 628 to a location of a mobile device of a vulnerable person, in accordance with one or more embodiments of the present disclosure. A controller (e.g., controller 102, previously described in connection with Figure 1) can cause the building map 618 to be displayed on the user interface 610.

As previously described above, the controller can receive the vulnerable person signal from a mobile device associated with a vulnerable person located in the facility. The controller can determine the location of the mobile device (e.g., and the location of the vulnerable person associated with the mobile device) in the facility.

As previously mentioned, the vulnerable person signal can be received by the controller. The vulnerable person signal can include evacuation data associated with the vulnerable person. For example, evacuation data can include identification information of the vulnerable person (e.g., the vulnerable person's name, birthday, address, etc.), a disability of the vulnerable person (e.g., the vulnerable person is a quadriplegic), and/or equipment that would assist in evacuation of the vulnerable person (e.g., a wheelchair).

In some examples, the display 616 can be located proximate to an access point of the facility. For example, the display 616 may be located proximate to an entrance to the facility. The display 616 may provide, via the user interface 610, the building map of the facility including the building layout including the zonal layout of the detection zones 608, the detection zone 608-2 in which the event is occurring, and a route 628 to a vulnerable person.

For example, an emergency services person may enter the facility in order to respond to the event. The emergency services person may review the user interface 610 and determine that a vulnerable person is located in the detection zone 608-3. For example, the user interface 610 can display the location of the vulnerable person on the building map 618, display the generated route 628 from the location of the display 616 to the vulnerable person, and can display the evacuation data of the vulnerable person. Utilizing such information, the emergency services person may be able to easily and quickly respond to the vulnerable person in order to assist the vulnerable person, render aid, etc.

Figure 7 is an example of instructions on a user interface 710 of a display including test results 730 of a test of an event device, in accordance with one or more embodiments of the present disclosure. A controller (e.g., controller 102, previously described in connection with Figure 1) can cause the test results 730 to be displayed on the user interface 710.

In some examples, the event devices in the facility may be under a maintenance mode in which the event devices are tested to ensure proper functionality in the event of an emergency event. Such testing results may be transmitted to the controller.

The controller can cause the user interface 710 to display the test results of a test of a proximate event device(s) to the display having the user interface 710. For example, as illustrated in Figure 7, event devices 1, 2, and 3 may be under test, where event devices 1 and 2 have passed, but the user interface 710 can also indicate that event device 3 has failed, and has a fault. Such an approach can easily indicate to a user that event device 3 should be investigated in order to remedy the fault.

Accordingly, generating a route through a facility during an event can utilize building maps displayed on user interfaces of displays throughout a facility. Such building maps can display information to assist occupants of the facility. For example, egress routes from the locations of the displays to exits of the facility that avoid areas having events can direct occupants safely away from the event and out of the facility, emergency instructions can further assist occupants in safe decision-making during an event, and additionally, the displays can assist emergency service personnel in responding to occupants who may require additional assistance. Such an approach can provide for event detection systems which are safer and reduce the risk of injury or death to occupants of the facility during an emergency event, as compared with previous approaches.

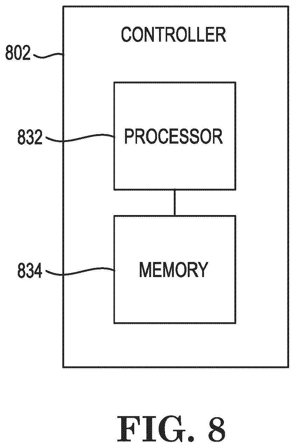

Figure 8 is an example of a controller 802 for generating a route through a facility during an event, in accordance with one or more embodiments of the present disclosure. As illustrated in Figure 8, the controller 802 can include a memory 834 and a processor 832 for generating a route through a facility during an event, in accordance with the present disclosure.

The memory 834 can be any type of storage medium that can be accessed by the processor 832 to perform various examples of the present disclosure. For example, the memory 834 can be a non-transitory computer readable medium having computer readable instructions (e.g., executable instructions/computer program instructions) stored thereon that are executable by the processor 832 for generating a route through a facility during an event in accordance with the present disclosure.

The memory 834 can be volatile or nonvolatile memory. The memory 834 can also be removable (e.g., portable) memory, or non-removable (e.g., internal) memory. For example, the memory 834 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 834 is illustrated as being located within controller 802, embodiments of the present disclosure are not so limited. For example, memory 834 can also be located internal to another computing resource (e.g., enabling computer readable instructions to be downloaded over the Internet or another wired or wireless connection).

The processor 832 may be a central processing unit (CPU), a semiconductor-based microprocessor, and/or other hardware devices suitable for retrieval and execution of machine-readable instructions stored in the memory 834.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A controller (102, 802) for generating a route (628) through a facility during an event, comprising:
a memory (834); and
a processor (832) configured to execute executable instructions stored in the memory (834) to:
receive an event detection signal from an event device (106) indicating an event is occurring in a facility, wherein the event device (106) is located in a predefined detection zone (108, 208, 308, 408, 608) of a plurality of predefined detection zones (108, 208, 308, 408, 608) in the facility;
determine the predefined detection zone (108, 208, 308, 408, 608) in which the event is occurring based on the event detection signal;
generate an egress route (322, 422, 628) out of the facility based on the determined predefined detection zone (108, 208, 308, 408, 608) having the event; and
cause a building map (218, 318, 418, 618) of the facility to be displayed on a user interface (210, 310, 410, 510, 610, 710) of a display (116, 216, 316, 416, 616), wherein the building map (218, 318, 418, 618) includes a building layout including a zonal layout of the plurality of predefined detection zones (108, 208, 308, 408, 608), the predefined detection zone (108, 208, 308, 408, 608) in which the event is occurring, and the egress route (322, 422, 628).

2. The controller (102, 802) of claim 1, wherein the egress route (322, 422, 628) is a route out of the facility from a location (220) of the display (116, 216, 316, 416, 616) in the facility.

3. The controller (102, 802) of claim 1, wherein the building map (218, 318, 418, 618) further includes a location (220) of the display (116, 216, 316, 416, 616) in the facility on the building layout relative to the plurality of predefined detection zones (108, 208, 308, 408, 608).

4. The controller (102, 802) of claim 1, wherein the processor (832) is configured to execute the instructions to cause the predefined detection zone (108, 208, 308, 408, 608) in which the event is occurring to be displayed having color-coding on the user interface (210, 310, 410, 510, 610, 710).

5. The controller (102, 802) of claim 1, wherein in response to the controller (102, 802) receiving emergency services information, the processor (832) is configured to execute the instructions to:
generate a revised egress route (322, 422, 628) out of the facility based on the emergency services information; and
cause the building map (218, 318, 418, 618) to be displayed on the user interface (210, 310, 410, 510, 610, 710) including the revised egress route (322, 422, 628).

6. The controller (102, 802) of claim 1, wherein the processor (832) is configured to execute the instructions to cause the building map (218, 318, 418, 618) to be displayed on the user interface (210, 310, 410, 510, 610, 710) in response to the event device (106) being in a normal operating mode.

7. The controller (102, 802) of claim 1, wherein in response to the event device (106) being in a maintenance mode where the event device (106) is under test, the processor (832) is configured to execute the instructions to cause the user interface (210, 310, 410, 510, 610, 710) to display test results (730) of the test of the event device (106).

8. The controller (102, 802) of claim 1, wherein the controller (102, 802) is configured to cause the building map (218, 318, 418, 618) to be displayed using predefined icons stored in a remote computing device.

9. The controller (102, 802) of claim 1, wherein the controller (102, 802) is configured to cause the building map (218, 318, 418, 618) to be displayed using the zonal layout, wherein the zonal layout is a predefined facility layout stored in a remote computing device.

10. The controller (102, 802) of claim 1, wherein the controller (102, 802) is located in a control panel (104) of an event detection system (100).

11. A method for generating a route (628) through a facility during an event, comprising:
receiving, by a controller (102, 802), a vulnerable person signal and an event detection signal from a first event device (106) indicating an event is occurring in a facility, wherein the first event device (106) is located in a first predefined detection zone (108, 208, 308, 408, 608) of a plurality of predefined detection zones (108, 208, 308, 408, 608) in the facility;
determining, by the controller (102, 802):
based on the event detection signal, the predefined detection zone (108, 208, 308, 408, 608) in which the event is occurring; and
based on the vulnerable person signal, a mobile device (112, 412) associated with a vulnerable person is located in a second predefined detection zone (108, 208, 308, 408, 608) of the plurality of predefined detection zones (108, 208, 308, 408, 608);
generating, by the controller (102, 802), a route (628) to the vulnerable person in the second predefined detection zone (108, 208, 308, 408, 608) based on the second predefined detection zone (108, 208, 308, 408, 608) having the event; and
displaying, by a user interface (210, 310, 410, 510, 610, 710) of a display (116, 216, 316, 416, 616), a building map (218, 318, 418, 618) of the facility to be displayed, wherein the building map (218, 318, 418, 618) includes a building layout including a zonal layout of the plurality of predefined detection zones (108, 208, 308, 408, 608), the predefined detection zone (108, 208, 308, 408, 608) in which the event is occurring, and the route (628) to the vulnerable person.

12. The method of claim 11, wherein the method includes displaying a location (220) of the vulnerable person on the building map (218, 318, 418, 618).

13. The method of claim 11, wherein the method includes displaying the route (628) from a location (220) of the display (116, 216, 316, 416, 616) in the facility to the vulnerable person.

14. The method of claim 11, wherein:
the vulnerable person signal includes evacuation data associated with the vulnerable person including at least one of:
identification information of the vulnerable person;
a disability of the vulnerable person; and
equipment to assist in evacuation of the vulnerable person; and
the method further includes displaying, by the user interface (210, 310, 410, 510, 610, 710), the evacuation data associated with the vulnerable person.

15. The method of claim 11, wherein the method includes displaying, by the user interface (210, 310, 410, 510, 610, 710), the building map (218, 318, 418, 618) on the display (116, 216, 316, 416, 616) that is located proximate to an access point of the facility.
